# EUROPEAN PATENT SPECIFICATION

(11) **EP 1 967 390 B1**
(45) Date of publication and mention of the grant of the patent: **28.04.2010**
(21) Application number: 08101923.4
(22) Date of filing: 25.02.2008
(51) Int. Cl.: B60C 11/00

(54) **Tyre with rubber tread which contains internal circumferential rubber stabilizer bars**
Reifen mit Gummilauffläche, die innen umfängliche Stabilisierungsbalken aus Gummi enthält
Pneu avec bande de roulement en caoutchouc contenant internement des barres de stabilisation circonférentielles en caoutchouc

(30) Priority: 05.03.2007 US 713847
(43) Date of publication of application: 10.09.2008
(73) Proprietor: The Goodyear Tire & Rubber Company, Akron, OH 44316-0001 (US)
(72) Inventor: Valentine, John Christopher, Coventry, West Midlands CV3 1AY (GB); Watkins, David Robert, Sutton Coldfield, West Midlands B74 3EG (GB)
(74) Representative: Kutsch, Bernd

(56) References cited:
- EP-A- 1 702 744
- US-A1- 2002 000 276

## Description

### Field of the Invention

This invention relates to a tyre, particularly a motorcycle tyre, having a camber rubber tread, particularly a high camber tread, which contains a central internal circumferential rubber stabilization element or bar, which extends to and is a part of the running surface of the tyre tread and a plurality of additional spaced apart internal circumferential rubber stabilization elements or bars, positioned within the tread outer cap rubber layer of which one or more may optionally be a part of the running surface of the tyre tread. In one embodiment, segments of the tread's outer cap rubber layer are substantially separated from each other, and may be thereby substantially dynamically de-coupled from each other, by one or more of said circumferential rubber stabilizer bars which extend radially outward into said outer tread cap rubber layer from an underlying tread base rubber layer.

### Background of the Invention

High performance tyres such as motorcycle tyres having high camber (convex shaped) rubber treads which, in transverse cross-section, are sharply curved (highly cambered) to provide good contact with the road surface under a wide range of driving conditions, including when the motorcycle is steeply banked in cornering. Maintenance of stability of such motorcycle tread with a consistent ground contact area or "tyre footprint" under a wide range of driving conditions can be important for motorcycle handling, particularly, for example, over varied terrain such as, for example, on a motorcycle race circuit. Promoting high motorcycle cornering power with good tyre tread lateral stability at relatively high cornering speeds under race conditions is an important consideration for a highly cambered motorcycle tyre tread.

Historically, US-A- 6,988,520 proposes a motorcycle tyre of a highly cambered tread configuration which presents a dual rubber running surface composed of two different tread rubber compounds. The tyre tread is composed of a relatively soft first tread rubber layer underlying a second harder tread rubber layer which is centered over the softer first tread layer.

Further, EP-A-774 367 proposes the use of two different tread compounds for a motorcycle race tyre where one side of the tread is provided with high grip rubber compound and the other side with a harder rubber compound. The tyre construction is provided for motorcycle race circuits where the majority of bends of the race circuit are in the same direction.

Also, JP-A- 61-211106 proposes a motorcycle tyre with a tread formed with three separate rubber compound zones each of which is of a full tread thickness.

In the description of this invention, the term "camber" or "camber value" relates to the ratio "H/W" as a ratio of the axial distance "H", or "height" from the tread's outer running surface to an imaginary line extending axially between the outer edges of the tread divided by the radial distance "W", or width", from the center of the tread's outer running surface to an outer edge of the tread, particularly the outer edge of the extended running surface (e.g. when the motorcycle is turning at a considerable angle) of the tyre. A highly cambered (convex shaped) high performance motorcycle tyre tread may have a H/W ratio of, for example, in a range of from 0.4 to 0.8, alternately 0.6 to 0.8.

The terms "axial" and "axially" refer to a direction that is parallel, or substantially parallel, to the axis of the intended rotation of the tyre.

The terms "radial" and "radially" refer to a direction that is radially outward from, or radially inward to, in a sense of being at a right angle (90°C) or substantially at a right angle to, the axis of the intended rotation of the tyre.

In the description of this invention, rubber compound, rubber composition, rubber blend and compounded rubber are terms which may be used interchangeably, unless otherwise indicated, to refer to rubber which has been mixed with rubber compounding ingredients. The terms "rubber" and "elastomer" are used interchangeably unless otherwise indicated. The term "phr" refers to parts by weight of an ingredient per 100 parts by weight of rubber in a rubber composition. Such terms are well known to those having skill in such art.

### Summary and Practice of the Invention

In accordance with this invention, a tyre, particularly a motorcycle tyre having a cambered tread (convex shaped with the primary road-contacting portion of the tread being in the axial central portion of the circumferential tread) according to claim 1 is provided.

Dependent claims refer to preferred embodiments of the invention.

The rubber composition of the central and additional internal rubber stabilizer bars or elements and the tread base rubber layer is a harder rubber composition (e.g. greater Shore A, 100°C, hardness) than the rubber composition of the outer tread cap rubber layer to promote dimensional stability for the outer tread cap rubber layer.

Accordingly, the rubber composition of said outer tread cap rubber layer is softer (e.g. lower Shore A, 100°C, hardness) than the rubber composition of said central and additional internal rubber stabilization bars and said tread base rubber layer to promote traction for the running surface of the tread.

Preferably, the portion of said circumferential central stabilizer bar which becomes a portion of the running surface of the tyre tread abridges the axial centerline of the tread and occupies from 20 to 40 percent, alternatively 25 to 35 percent, of the running surface of the tread.

Preferably, the said circumferential central stabilizer bar divides the outer tread cap rubber layer into two axial circumferential tread segments, with one of said segments positioned on each side of said circumferential central stabilizer bar.

In a preferred embodiment, said two circumferential tread segments are physically separated from each other by said (harder) circumferential central stabilizer bar to thereby promote dimensional stability of the tyre tread, particularly for said outer tread cap rubber layer.

In a further embodiment, said two circumferential tread segments are dynamically de-coupled from each other by said (harder) circumferential central stabilizer bar, (in a sense of not ordinarily completely transmitting forces generated by one of said segments to the other segment), to thereby promote dimensional stability of the tyre tread, particularly for said outer tread cap rubber layer.

In one preferred embodiment, at least a portion of said additional circumferential internal rubber stabilization bars (in addition to said central stabilization bar) extend substantially through and thereby substantially divide the said outer tread cap rubber layer into individual sub-segments.

Accordingly, in an additional embodiment, at least a portion of said individual outer tread cap sub-segments are substantially physically separated from each other by said stabilizer bars to thereby further promote dimensional stability for the tyre tread, particularly for the tread outer tread cap layer.

Accordingly, in an additional embodiment, at least a portion of said individual outer tread cap sub-segments are substantially dynamically de-coupled from each other by said stabilizer bars in a sense of not ordinarily completely transmitting forces generated by one of said segments to the other segment to thereby promote dimensional stability of the tyre tread, particularly for said outer tread cap rubber layer.

In a desirable practice, the rubber composition of the tread base rubber layer and central and additional stabilizer bars is at least 5 Shore A (100°C) hardness units greater than the rubber composition of the tread outer cap rubber layer.

In one embodiment, the rubber composition of the tread base rubber layer and associated central and additional stabilizer bar extensions thereof has a Shore A (100°C) hardness value in a range of from 46 to 60 and at least 5 of such Shore A hardness units greater than the Shore A (100°C) hardness of said tread cap layer rubber composition.

In a further embodiment, the rubber composition of the tread base rubber layer and associated central and additional stabilizer bar extensions thereof has a 300 percent dumb bell tensile modulus at 100°C in a range of from 5.1 to 9.0 MPa, alternatively 6 to 8 MPa, and at least 1 MPa greater than said tensile modulus of said tread cap layer rubber composition.

In one embodiment, the rubber composition of the tread outer cap rubber layer has a Shore A hardness value at 100°C in a range of from 35 to 45.

In a further embodiment, the rubber composition of the tread outer cap rubber layer has a 300 percent dumb bell tensile modulus at 100°C in a range of from 2.5 to 4.9 MPa, alternatively 3 to 4.5 MPa.

In practice, said tread may contain, for example, a total of from 2 through 18, alternately from 6 to, and including, 10, of said additional stabilizer bars.

Said additional stabilizer bars may be positioned in equal numbers on each side (in an axial direction) of said central internal stabilizer bar.

In practice, the central stabilizer bar may abridge the axial midline (EP) of the tread in a manner to provide said two tread cap rubber layer sections of about (approximately) equal axial running surface widths.

In practice, for an optional asymmetrical tyre tread, the central stabilizer bar may abridge the axial midline (EP) of the tread in a manner to provide said two tread cap rubber layer sections of unequal running surfaces. For example, the running surface of one lateral tread cap outer rubber layer section may occupy at least a 20 greater percent of the tread running surface than the other tread cap outer rubber layer section. For a further example, one lateral tread outer rubber layer section may comprise from 20 to 30 percent of the tread running surface and the other lateral tread cap outer rubber layer may comprise from 40 to 50 percent of the tread running surface, (wherein said central stabilizer occupies the aforesaid from 20 to 40 percent of the tread running surface).

In practice, for an asymmetrical tyre tread, the said additional rubber stabilizer bars may be distributed unequally within said two lateral sections of said outer tread cap rubber layer to thereby divide said two lateral sections of said outer tread cap rubber layer into an unequal number of sub-sections therein.

For example, where the running surface of said tyre tread contains from 2 to 18 subsections (created by said stabilizer bar extensions from said tread base rubber layer), one lateral outer tread layer section may contain from 1 to 9 subsections, with the other and remaining lateral tread layer section containing the remaining subsections, so long as one of said tread sections contain at least one more subsection than the other tread section.

In one embodiment, while said additional stabilizer bars may be of various shapes, preferably they are of a general triangular shape configuration with their base being a part of (and of the same rubber composition) the tread base rubber layer, and their apex, which may be an entruncated apex, extends to the running surface of the tread. In such case, while an individual additional stabilizing element may constitute less than 1 percent of the running surface of the tread, as the tread wears, it may eventually constitute, for example, up to 5 percent or more of the running surface of the tyre tread, to thereby further enhance the dimensional stability (e.g. the axial stability) of the outer tread cap rubber layer as the tread wears away during use.

In one embodiment, such triangles, whether or not having entuncated apex's, may be substantially equilateral in shape and therefore have inclusive angles of 60°.

In practice, said tread preferably has a camber with a W/L ratio in a range of from 0.4 to 0.8.

In practice, the overall average tread thickness may vary, for example, from 4 to 8 mm at the midline (EP), (the axial midline) of the tyre to 5 to 12 mm at the lateral outer edges of the tread, depending somewhat upon the size of the individual tyre and its intended use.

In practice, the tread base rubber layer typically extends across the width, or at least a major portion of the width, of the tread and, other than said extensions thereof to form said central stabilizer bar and said additional stabilizer bars, may have a thickness, for example, ranging from 8 to 90, alternately from 8 to 20, percent of the overall tread thickness, namely the combination of said outer tread cap rubber layer and said tread base rubber layer, depending somewhat upon the portion of the tread to be taken into consideration and upon the tyre size and its intended use.

### Description of the Drawings

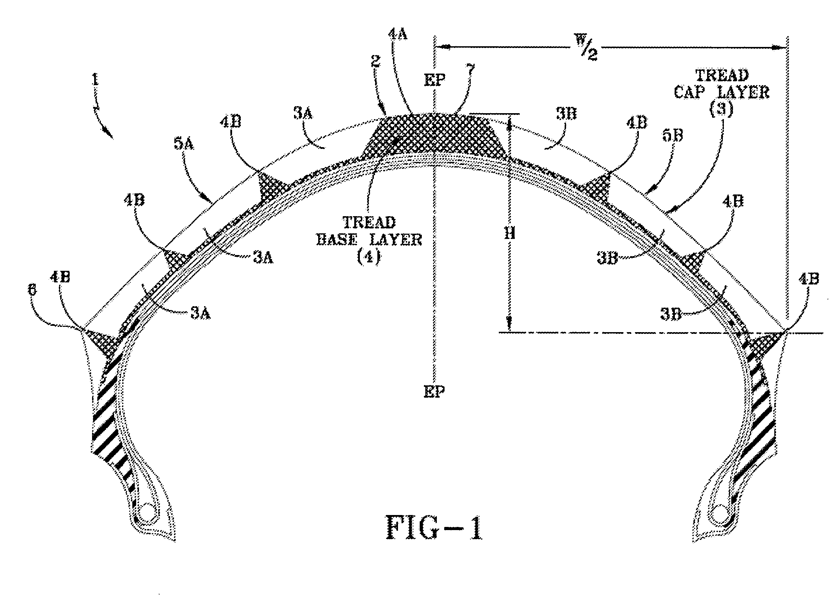

Further aspects of the present invention will become apparent from the description of the following embodiments in conjunction with the attached diagramatic drawing in which FIG 1 is presented to illustrate a cross-section of a motorcycle tyre 1 having a wide convex tread 2 intended for use in high performance racing wherein the convex tread 2 is highly cambered and contains internal rubber stabilizer bars.

The illustrated convex shaped tyre tread 2 is intended to be representative of (not necessarily exact in the drawing) a camber value (H/W) of 0.6.

The tyre tread is of a cap/base construction comprised of an outer Tread Cap Layer 3 and an underlying Tread Base Layer 4.

For this drawing presentation, the tread base rubber layer 4 comprises a harder rubber composition than the rubber composition of the outer tread cap rubber layer 3.

A central stabilizer bar 4A is a part of and an extension of said tread base rubber layer 4 through said tread cap layer 3 to and including a portion of the tread running surface 7 and which abridges the axial midline (EP) of the tread.

The central stabilizer bar 4A divides the outer tread cap rubber layer into two substantially equal lateral sections 5A and 5B. The two sections 5A and 5B are physically separated and dynamically de-coupled from each other by said central stabilizer bar 4A to promote a dimensional stability for the tyre tread particularly for a motorcycle during turning maneuvers.

The central portion of the tread running surface 7, composed of the central stabilizer bar 4A as an extension of the harder tread base rubber layer 4 extends, for the purposes of this drawing, over 25 percent of the tread running surface 7.

Six additional, spaced apart, stabilizer bars 4B are shown as being evenly distributed on each side, namely three on each side, of the central stabilizer bar 4A. The stabilizer bars 4B are of a generally triangular configuration and extend from the tread base rubber layer 4 radially outward into and through the tread cap layer 3 with their apex's extending to a running surface 7 of the tyre. The outer tread cap layer 3 is divided into individual subsections 3A in one lateral section 5A of the tread cap layer 3 and individual subsections 3B of the other lateral section 5B of the tread cap layer 3.

The softer rubber of the tread cap outer layer 3 is provided to promote good grip (traction), particularly on motorcycle cornering, when the tyre is mostly at a significant angle to a vertical position in a manner that most of the contact of the tyre with the ground involves one of the two separate, de-coupled axial lateral sections of the tread softer rubber composition 3 to thereby promote enhanced traction and control of the tyre.

The harder rubber of the tread base rubber layer 4, which includes the central stabilizer bar 4A and the plurality of additional stabilizing bars 4B as extensions of the tread base rubber layer 4, is provided to promote low temperature generation (cooler running) in straight line vehicular (motorcycle) running, as well as dimensional stability, when the tyre 1 is mostly in a vertical, upright position to promote the control of the tyre in such running condition..

For this descriptive drawing, the properties of the tread cap rubber layer 3 include a Shore A hardness value at 100°C of 35 to 49 and a 300 percent dumb-bell tensile modulus at 100°C and 300 percent extension of less than 5 MPa, namely from 2.5 to 4.9 MPa.

In contrast, for this descriptive drawing, the properties of the tread base harder rubber layer 4 include a Shore A hardness value at 100°C in a range of from 46 to 60, and at least 5 units greater than the Shore A hardness of said tread cap softer rubber layer 3 and a 300 percent dumb-bell tensile modulus at 100°C and 300 percent extension of 5.1 to 9 MPa and at least 1 MPa greater than that of the said tread cap rubber layer 3.

The following Example is provided to better understand the invention. The parts and percentages are by weight unless otherwise indicated.

### EXAMPLE

Rubber compositions were prepared for a motorcycle tyre tread identified herein as Sample A and Sample B for a motorcycle tyre tread configuration similar to FIG 1.

Sample A is intended to be a softer, tread traction promoting, rubber composition for an outer tread cap rubber layer for a motorcycle tyre tread.

Sample B is intended to be a harder (stiffer) rubber composition for an underlying tread base rubber layer for a motorcycle tyre tread and for the aforesaid central internal stabilizer bar and additional internal stabilizer bars.

The rubber compositions are illustrated in the following Table 1 where parts are by weight unless otherwise indicated.

**Table 1**

| | **Samples (parts by weight)** | |
|---|---|---|
| | **Softer** | **Harder** |
| **Material** | **A** | **B** |
| **Non-Productive Mixing** | | |
| S-SBR rubber¹ | 80 | 100 |
| S-SBR rubber² | 20 | 0 |
| Carbon black³ | 90 | 86 |
| Stearic acid⁴ | 1.3 | 1.4 |
| Zinc oxide | 4 | 4.1 |
| Rubber processing oil & polymer extender oil | 78 | 65 |
| Antioxidants and processing aids | 16.5 | 13.4 |

| **Productive Mixing Step** | | |
|---|---|---|
| Sulfur | 1.7 | 2 |
| Accelerator(s)⁵ | 2.6 | 3.6 |

| | | |
|---|---|---|
| ¹Organic solvent solution polymerization prepared styrene/butadiene (SBR) rubber ²Organic solvent solution polymerization prepared styrene/butadiene (SBR) rubber ³High structure SFA type rubber reinforcing carbon black ⁴Comprised of primarily of stearic acid (e.g. at least 90 weight percent stearic acid) ⁵Vulcanization accelerators of the sulfenamide and diphenyl guanidine types | | |

Various physical properties of the Samples of Table 1 are reported in Table 2.

**Table 2**

| | **Samples** | |
|---|---|---|
| | **Softer** | **Harder** |
| **Properties** | **A** | **B** |
| **Shore A Hardness (cured at 165°C for about 21 minutes)** | | |
| 100°C (ASTMD-2240) | 39 | 48 |

| **Stress-strain** | | |
|---|---|---|
| Tensile strength (dumb-bell) (MPa) | 9.8 | 9.3 |
| Elongation (dumb-bell) (%) | 601 | 453 |
| Modulus (300%), 100°C, dumb-bell (MPa) | 3.6 | 5.7 |

A highly cambered motorcycle tyre of size 200/70R420 was prepared having a tread of a cap/base construction and a first circumferential rubber stabilizer bar and six additional, spaced apart, circumferential rubber stabilizer bars similar to the motorcycle tyre of FIG 1 of rubber compositions comprised of softer Sample A of Example I for the tread cap rubber layer and harder Sample B of Example I for the tread base rubber layer and central and additional internal rubber stabilizer bars.

The resultant motorcycle tyre was observed to provide good precision and lateral stability in cornering conditions in which the lateral sections and subsections of the tread cap softer rubber layer (rubber Sample A) were involved in ground-contacting and in straight running conditions in which the central harder rubber stabilizer portion (rubber Sample B) was primarily involved with ground-contacting.

## Claims

1. A tyre having a cambered tread (2) wherein said tread comprises a cap/base construction having an outer tread cap rubber layer (3) with a tread running surface (7) and an underlying tread base rubber layer (4);
wherein said outer tread cap rubber layer (3) contains a central circumferential rubber stabilizer element (4A) and at least two additional individual spaced apart, circumferential rubber stabilizer elements (4B);
wherein said central and additional rubber stabilizer elements (4A, 4B) are a part of said tread base rubber layer (4) which extend radially outward into said outer tread cap rubber layer (3) and are a unitary part of and of the same rubber composition as the said tread base rubber layer (4),
wherein said central rubber stabilizer element (4A) extends to and is a portion of the running surface of the tread (7), and
wherein the rubber composition of said central and said additional circumferential rubber stabilizer elements (4A, 4B) and said tread base rubber layer (4) has a Shore A (100°C) hardness greater than the Shore A (100°C) hardness of the rubber composition of the outer tread cap rubber layer.

2. The tyre of claim 1 wherein the portion of said circumferential central rubber stabilizer element (4A) which is a portion of the running surface (7) of the tyre tread abridges the axial centerline of the tread (2) and occupies from 20 to 40 percent of the running surface of the tread (2).

3. The tyre of claim 1 or 2 wherein said tyre has a W/L camber in a range of from 0.4 to 0.8.

4. The tyre of at least one of the previous claims wherein at least a portion of said additional circumferential rubber stabilization elements (4B) extend substantially through and thereby substantially divide the outer tread cap rubber layer (3) into individual sub-segments (3A, 3B).

5. The tyre of at least one of the previous claims wherein the rubber composition of the tread base rubber layer and the central and additional circumferential rubber stabilizer elements (4A, 4B) is at least 5 Shore A (100°C) hardness units greater than the rubber composition of the outer tread outer cap rubber layer (3).

6. The tyre of at least one of the previous claims wherein the rubber composition of the tread base rubber layer (4) and associated central and additional stabilizer element (4A, 4B) extensions thereof has a Shore A (100°C) hardness value in a range of from 46 to 60 and at least 5 of such Shore A hardness units greater than the Shore A (100°C) hardness of said tread cap layer rubber composition.

7. The tyre of at least one of the previous claims wherein the rubber composition of the tread base rubber layer and associated central and additional stabilizer element (4A, 4B) extensions thereof has a 300 percent dumb bell tensile modulus at 100°C in a range of from 5.1 to 9.0 MPa and at least 1 MPa greater than said tensile modulus of said tread cap layer rubber composition.

8. The tyre of at least one of the previous claims wherein the rubber composition of the outer tread cap rubber layer (3) has a Shore A hardness value at 100°C in a range of from 35 to 45.

9. The tyre of at least one of the previous claims wherein the rubber composition of the outer tread cap rubber layer (3) has a 300 percent dumb bell tensile modulus at 100°C in a range of from 2.5 to 4.9 MPa.

10. The tyre of at least one of the previous claims wherein said tread contains a total of from 2 through 18, alternatively 6 to 10, of said additional stabilizer elements.

## Patentansprüche

1. Reifen mit einer gewölbten Lauffläche (2), wobei die Lauffläche eine Oberteil-/Unterteilkonstruktion mit einer äußeren Laufflächenoberteilgummischicht (3) mit einer Profillauffläche (7) und einer darunterliegenden Laufflächenunterteilgummischicht (4) umfasst;
wobei die äußere Laufflächenoberteilgummischicht (3) ein zentrales umfangsgerichtetes Gummi-Stabilisierelement (4A) und mindestens zwei zusätzliche individuelle, voneinander beabstandete umfangsgerichtete Gummi-Stabilisierelemente (4B) enthält;
wobei die zentralen und zusätzlichen Gummi-Stabilisierelemente (4A, 4B) Teil der Laufflächenunterteilgummischicht (4) sind, die sich radial auswärts in die äußere Laufflächenoberteilgummischicht (3) erstrecken und einstückig mit der Laufflächenunterteilgummischicht (4) und aus der gleichen Kautschukzusammensetzung wie diese ausgebildet sind,
wobei das zentrale Gummi-Stabilisierelement (4A) sich bis zur Laufoberfläche der Lauffläche (7) erstreckt und Teil davon ist, und
wobei die Kautschukzusammensetzung des zentralen und der zusätzlichen umfangsgerichteten Gummi-Stabilisierelemente (4A, 4B) und die Laufflächenunterteilgummischicht (4) eine Shore A (100°C)-Härte aufweisen, die größer als die Shore A (100°C)-Härte der Kautschukzusammensetzung der äußeren Laufflächenoberteilgummischicht ist.

2. Reifen nach Anspruch 1, wobei derjenige Teil des umfangsgerichteten zentralen Gummi-Stabilisierelements (4A), der Teil der Laufoberfläche (7) der Reifenlauffläche ist, die axiale Mittellinie der Lauffläche (2) überspannt und 20 bis 40 Prozent der Laufoberfläche der Lauffläche (2) einnimmt.

3. Reifen nach Anspruch 1 oder 2, wobei der Reifen eine Wölbung W/L in einem Bereich von 0,4 bis 0,8 hat.

4. Reifen nach mindestens einem der vorgenannten Ansprüche, wobei mindestens ein Teil der zusätzlichen umfangsgerichteten Gummi-Stabilisierelemente (4B) sich im Wesentlichen durch die äußere Laufflächenoberteilgummischicht (3) erstreckt und diese **dadurch** im Wesentlichen in einzelne Untersegmente (3A, 3B) unterteilt.

5. Reifen nach mindestens einem der vorgenannten Ansprüche, wobei die Kautschukzusammensetzung der Laufflächenunterteilgummischicht und die zentrale und die zusätzlichen umfangsgerichteten Gummi-Stabilisierelemente (4A, 4B) mindestens 5 Shore A (100°C)-Härteeinheiten größer ist als die Kautschukzusammensetzung der äußeren Laufflächenoberteilgummischicht (3).

6. Reifen nach mindestens einem der vorgenannten Ansprüche, wobei die Kautschukzusammensetzung der Laufflächenunterteilgummischicht (4) und der zugehörigen zentralen und zusätzlichen Stabilisierelement(4A, 4B)-Fortsätze davon einen Shore A (100°C)-Härtewert in einem Bereich von 46 bis 60 und mindestens 5 solcher Shore A-Härteeinheiten größer als die Shore A (100°C)-Härte der Laufflächenoberteilkautschukzusammensetzung aufweist.

7. Reifen nach mindestens einem der vorgenannten Ansprüche, wobei die Kautschukzusammensetzung der Laufflächenunterteilgummischicht und der zugehörigen zentralen und zusätzlichen Stabilisierelement (4A, 4B)-Fortsätze davon einen 300 Prozent-Hantel-Zugmodul bei 100°C in einem Bereich von 5,1 bis 9,0 MPa und mindestens 1 MPa größer als der Zugmodul der Laufflächenoberteilkautschukzusammensetzung aufweist.

8. Reifen nach mindestens einem der vorgenannten Ansprüche, wobei die Kautschukzusammensetzung der äußeren Laufflächenoberteilgummischicht (3) einen Shore A-Härtewert bei 100°C in einem Bereich von 35 bis 45 aufweist.

9. Reifen nach mindestens einem der vorgenannten Ansprüche, wobei die Kautschukzusammensetzung der äußeren Laufflächenoberteilgummischicht (3) einen 300 Prozent-Hantel-Zugmodul bei 100°C in einem Bereich von 2,5 bis 4,9 MPa aufweist.

10. Reifen nach mindestens einem der vorgenannten Ansprüche, wobei die Lauffläche eine Gesamtsumme von 2 bis einschließlich 18, alternativ 6 bis 10, der zusätzlichen Stabilisierelemente enthält.

## Revendications

1. Bandage pneumatique possédant une bande de roulement cambrée (2), ladite bande de roulement comprenant une structure du type sommet/base possédant une couche de caoutchouc externe (3) au sommet de la bande de roulement comprenant une surface de roulement de bande de roulement (7) et une couche de caoutchouc sous-jacente à la base de la bande de roulement (4) ;
ladite couche de caoutchouc externe (3) au sommet de la bande de roulement contenant un élément stabilisateur central en caoutchouc (4A) s'étendant en direction circonférentielle et au moins deux éléments stabilisateurs individuels supplémentaires en caoutchouc (4B) s'étendant en direction circonférentielle et espacés l'un de l'autre ;
lesdits éléments stabilisateurs en caoutchouc central et supplémentaires (4A, 4B) faisant partie de ladite couche de caoutchouc à la base de la bande de roulement (4) qui s'étend vers l'extérieur en direction radiale jusque dans ladite couche de caoutchouc externe (3) au sommet de la bande de roulement et font partie de ladite couche de caoutchouc à la base de la bande de roulement (4) tout en possédant la même composition de caoutchouc que celle de cette dernière ;
ledit élément stabilisateur central en caoutchouc (4A) s'étendant jusqu'à la surface de roulement de la bande de roulement (7) et représentant une portion de cette surface ; et
la composition de caoutchouc desdits éléments stabilisateurs en caoutchouc central et supplémentaires (4A, 4B) s'étendant en direction circonférentielle et de ladite couche de caoutchouc (4) à la base de la bande de roulement possédant une dureté Shore A (à 100 °C) supérieure à la dureté Shore A (à 100 °C) de la composition de caoutchouc de la couche de caoutchouc externe au sommet de la bande de roulement.

2. Bandage pneumatique selon la revendication 1, dans lequel la portion dudit élément stabilisateur central en caoutchouc (4A) s'étendant en direction circonférentielle qui fait partie de la surface de roulement (7) de la bande de roulement du bandage pneumatique surplombe la ligne médiane axiale de la bande de roulement (2) et occupe de 20 à 40 % de la surface de roulement de la bande de roulement (2).

3. Bandage pneumatique selon la revendication 1 ou 2, dans lequel ledit bandage pneumatique possède un rapport de cambrure W/L dans la plage de 0,4 à 0,8.

4. Bandage pneumatique selon au moins une des revendications précédentes, dans lequel au moins une portion desdits éléments de stabilisation supplémentaires en caoutchouc (4B) s'étend essentiellement à travers la couche de caoutchouc externe au sommet de la bande de roulement (3) et subdivise essentiellement ladite couche en sous-segments individuels (3A, 3B).

5. Bandage pneumatique selon au moins une des revendications précédentes, dans lequel la composition de caoutchouc de la couche de caoutchouc à la base de la bande de roulement et des éléments stabilisateurs en caoutchouc central et supplémentaires (4A, 4B) possède une dureté Shore A (à 100 °C) supérieure à concurrence d'au moins 5 unités à celle de la composition de caoutchouc de la couche de caoutchouc externe au sommet de la bande de roulement (3).

6. Bandage pneumatique selon au moins une des revendications précédentes, dans lequel la composition de caoutchouc de la couche de caoutchouc (4) à la base de la bande de roulement et de leurs prolongements associés sous la forme des éléments stabilisateurs central et supplémentaires (4A, 4B) possède une dureté Shore A (à 100 °C) qui se situe dans la plage de 40 à 60 et qui est supérieure à concurrence d'au moins 5 unités à la dureté Shore A (à 100 °C) de la composition de caoutchouc de la couche de caoutchouc externe au sommet de la bande de roulement.

7. Bandage pneumatique selon au moins une des revendications précédentes, dans lequel la composition de caoutchouc de la couche de caoutchouc (4) à la base de la bande de roulement et de leurs prolongements associés sous la forme des éléments stabilisateurs central et supplémentaires (4A, 4B) possède un module de traction basé sur une éprouvette en forme d'haltère à 100 °C qui se situe dans la plage de 5,1 à 9,0 MPa et qui est supérieur, à concurrence d'au moins 1 MPa audit module de traction de ladite composition de caoutchouc de la couche au sommet de la bande de roulement.

8. Bandage pneumatique selon au moins une des revendications précédentes, dans lequel la composition de caoutchouc de la couche (3) au sommet de la bande de roulement possède une dureté Shore A à 100 °C dans la plage de 35 à 45.

9. Bandage pneumatique selon au moins une des revendications précédentes, dans lequel la composition de caoutchouc de la couche (3) au sommet de la bande de roulement possède un module de traction basé sur une éprouvette en forme d'haltère à 100 °C dans la plage de 2,5 à 4,9 MPa.

10. Bandage pneumatique selon au moins une des revendications précédentes, dans lequel ladite bande de roulement contient au total de 2 à 18, en variante de 6 à 10 éléments stabilisateurs supplémentaires.
